# EUROPEAN PATENT SPECIFICATION

(11) **EP 3 186 209 B1**
(45) Date of publication and mention of the grant of the patent: **07.10.2020**
(21) Application number: 15835183.3
(22) Date of filing: 11.08.2015
(51) Int. Cl.: C04B 14/04, B01J 20/30, C04B 14/08, B01J 20/14, C04B 35/14, C04B 35/626, C12H 1/044, C09C 1/28, C09C 3/12

(54) **METHODS OF MAKING HIGHLY PURIFIED DIATOMACEOUS EARTH WITH WIDE RANGE OF FILTRATION RATES**
VERFAHREN ZUR HERSTELLUNG VON HOCHGEREINIGTEM KIESELGUR MIT BREITEM FILTRATIONSRATENBEREICH
PROCÉDÉS DE FABRICATION DE TERRE DE DIATOMÉES HAUTEMENT PURIFIÉE PRÉSENTANT UNE LARGE PLAGE DE VITESSES DE FILTRATION

(30) Priority: 29.08.2014 US 201462043614 P
(43) Date of publication of application: 05.07.2017
(73) Proprietor: Imerys Filtration Minerals, Inc., San Jose, CA 95112 (US)
(72) Inventor: LU, Jie, Lompoc, CA 93536 (US)
(74) Representative: Rushton, David John
(86) International application number: PCT/US2015/044696
(87) International publication number: WO 2016/032745

(56) References cited:
- US-A1- 2001 023 233
- US-A1- 2011 195 168
- US-A1- 2013 225 695
- NEZAHAT EDIZ ET AL: "Improvement in filtration characteristics of diatomite by calcination", INTERNATIONAL JOURNAL OF MINERAL PROCESSING., vol. 94, no. 3-4, 1 April 2010 (2010-04-01), pages 129-134, XP055455810, NL ISSN: 0301-7516, DOI: 10.1016/j.minpro.2010.02.004
- SUZAN S IBRAHIM ET AL: "Evaluation of Egyptian diatomite for filter aid applications", PHYSICOCHEM. PROBL. MINER. PROCESS, vol. 47, no. 1, 31 December 2011 (2011-12-31), pages 113-122, XP055455860, ISSN: 1643-1049
- HADJAR ET AL: "Elaboration and characterisation of new mesoporous materials from diatomite and charcoal", MICROPOROUS AND MESOPOROUS MATERIALS, ELSEVIER, AMSTERDAM, NL, vol. 107, no. 3, 16 November 2007 (2007-11-16), pages 219-226, XP022349127, ISSN: 1387-1811, DOI: 10.1016/J.MICROMESO.2007.01.053
- William E. Hurst: "Replacing Food Grade Celite Media with AW Celite NF Media in CGMP Pharmaceutical Processes", , 19 December 2005 (2005-12-19), XP055455696, Retrieved from the Internet: URL:https://web.archive.org/web/2005121908 5733if_/http://www.advancedminerals.com:80 /pdf/AMC04_Repl._Fd._Grd._w._USP_Grd._Diat .pdf [retrieved on 2018-03-01]
- GOREN R ET AL: "A study on the purification of diatomite in hydrochloric acid", SCANDINAVIAN JOURNAL OF METALLURGY, MUNKSGAARD, COPENHAGEN, DK, vol. 31, no. 2, 1 April 2002 (2002-04-01), pages 115-119, XP002677358, ISSN: 0371-0459, DOI: DOI:10.1034/J.1600-0692.2002.310205.X

## Description

### Field of the Disclosure

The present disclosure relates to highly purified diatomaceous earth. The disclosure also relates to a method of making highly purified diatomaceous earth filter aids. The filter aids may have a wide range of filtration rates. More specifically, the present invention relates to a method of making a highly purified diatomite composition.

### Background

Diatomite, also referred to as "diatomaceous earth," "DE," or "kieselguhr," is a sedimentary rock that comprises fossilized skeletons of diatoms. Diatomite products can be obtained from diatomaceous earth, which is a sediment enriched in biogenic silica (i.e., silica produced or brought about by living organisms) in the form of the siliceous frustules (i.e., shells or skeletons) of diatoms. Diatoms are unicellular aquatic plants related to algae that have opal-like, amorphous silica (SiO₂•H₂O) skeletons comprising small amounts of microcrystalline materials. Diatomite may also contain small amounts of other substances, including but not limited to Na₂O, MgO, Al₂O₃, SO₃, Cl, MnO, Fe₂O₃, TiO₂, P₂O₅, CaO, and K₂O.

Diatoms are a diverse array of microscopic, single-celled golden brown algae of the class *Bacillariophyceae,* which possess an ornate siliceous skeleton (i.e., frustule) of varied and intricate structure consisting of two valves which, in the living diatom, fit together much like a pill box. The morphology of the frustules varies widely among species and serves as the basis for taxonomic classification; over at least 2,000 distinct species are known. The surface of each valve is punctuated by a series of openings that comprise the complex fine structure of the frustule and impart a design that is distinctive to individual species. The size of typical frustules ranges from 0.75 to 1,000 microns, although the majority are in a range of 10 to 150 microns. These frustules are sufficiently durable to retain much of their porous and intricate structure virtually intact through long periods of geologic time when preserved in conditions that maintain chemical equilibrium.

The fundamental chemical composition and the intricate and porous structure of the diatom frustule give diatomite unique commercial value and versatility unmatched by other natural forms of silica in, for example, filtration and filler applications. The fine particulate structure of the diatom skeleton imparts low density and high surface area, as well as high porosity and permeability.

Some sources of diatomite contain high percentages of calcium-containing compounds in the deposits, often in the form of calcite and some aragonite. Calcined diatomite products all contain a high level of calcium oxide (CaO), which can lead to high level of soluble calcium contents in diatomite-based products. In order to minimize calcium solubility in food grade applications, most of the filter aid production of diatomite-based products has been carried out using ores that are categorized as "1A" or "1B" grade with calcium carbonate levels of 5-9%. In contrast, filler grade products for polymer and other non-food applications are usually processed from ores that contain high calcium carbonate content, such as the "3A" or "3B" grade ores. Grade 3B ores can contain calcium carbonate in excess of 20%.

When high-calcium diatomite is calcined, it can result in high levels of calcium-containing materials, such as calcium oxide, in the finished products. Calcined and flux calcined diatomite products having high calcium contents can also be problematic because they may have a relatively high pH, high beer soluble calcium component, and high haze in plastic film.

The availability of the relatively low calcium carbonate ores (e.g., 1A and 1B grade ores) has diminished significantly over the years, and the mining cost for these ores has become increasingly expensive. It is generally expected that as the availability of these low calcium ores diminishes, the ability to make diatomite-based filters and food-grade products may also diminish and become increasingly expensive. Hadjar et al: "Elaboration and characterisation of new mesoporous materials from diatomite and charcoal", Microporous and mesoporous materials, Elsevier, Amsterdam, vol. 107, no. 3, 16 November 2007, pages 219-226 relates to the preparation of composite materials combining a diatomite and charcoal by pyrolysis and chemical treatment with HCl. William E. Hurst: "Replacing Food Grade Celite Media with AW Celite NF Media in CGMP Pharmaceutical Processes", 19 December 2005 relates to change-control factors with converting from a conventional "Food Grade" to a high purity "NF Grade" Celite media. Nezahat Ediz et al: "Improvement in filtration characteristics of diatomite by calcination", International Journal of Mineral Processing, vol. 94, no. 3-4, 1 April 2010, pages 129-134 relates to a study of the calcination and filtration characteristics of diatomite. Susan S Ibrahim et al: "Evaluation of Egyptian diatomite for filter aid applications", Physicochem. Probl. Miner. Process, vol. 47, no. 1, 31 December 2011 relates to a study of the characterization of a technological diatomite sample using various techniques.

Accordingly, it may be desirable to provide highly purified diatomite for use as filter aids and other applications where low calcium may be desirable. It may also be desirable to provide highly purified diatomite filter aids with a wide range of filtration rates. It may be further desirable to provide a low soluble calcium product made from diatomite.

### SUMMARY

In the following description, certain aspects and embodiments will become evident. It should be understood that the aspects and embodiments, in their broadest sense, could be practiced without having one or more features of these aspects and embodiments. It should be understood that these aspects and embodiments are merely exemplary. The present invention is defined in and by the appended claims.

According to an aspect of this disclosure, there is provided a method of making a highly purified diatomite composition, the method comprising: providing a diatomite comprising at least 5% of a calcium-containing compound; flux calcining the diatomite at temperatures ranging from 300°C to 1300°C; and acid washing the diatomite with an acid solution having an acid strength in a range of from 0.1 M to 2 M wherein the calcining step occurs prior to the acid washing step, wherein the flux calcined, acid-washed diatomite comprises less than or equal to 2% total of extractable aluminium containing oxides and iron containing oxides and less than 5% of the calcium-containing compound, wherein the extractable aluminium containing oxides and iron-containing oxides are soluble in the acid solution.

The acid washing may comprise washing the diatomite with at least one acid selected from the group consisting of sulfuric acid (H₂SO₄), hydrochloric acid (HCI), and nitric acid (HNO₃). The method may not include a flotation step.

The method may include providing a diatomite comprising less than or equal to about 2% of combined contents of alumina (Al₂O₃) and iron-containing oxide.

### BRIEF DESCRIPTION OF THE DRAWINGS

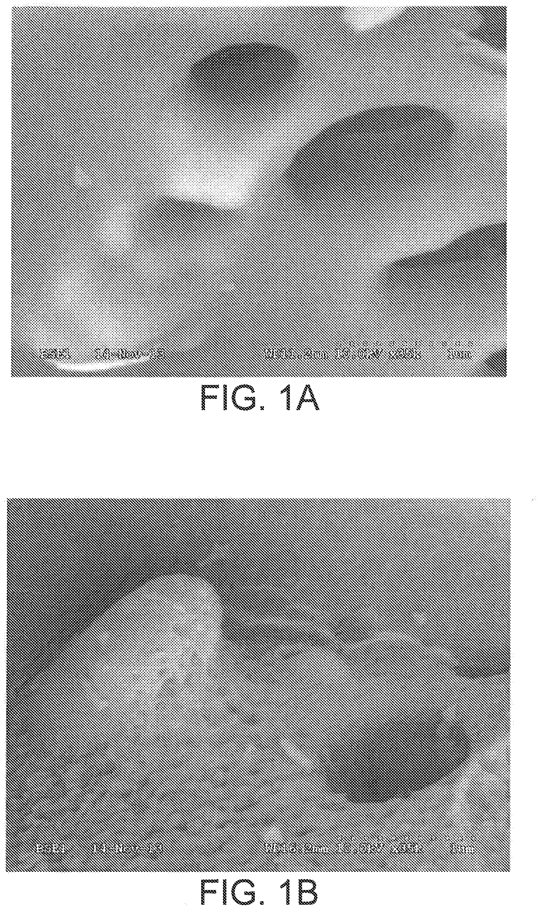

FIG. 1A shows an image of a calcined diatomite composition corresponding to Control 2.
FIG. 1B shows an image of an acid-washed, calcined diatomite composition of FIG. 1A and corresponding to Sample B1.

### DESCRIPTION OF EXEMPLARY EMBODIMENTS

The method of making a highly purified diatomite composition includes providing a diatomite having at least 5% of a calcium-containing compound, flux calcining the diatomite, and acid washing the diatomite. The acid washing includes acid washing the calcined diatomite. The flux calcined, acid-washed diatomite includes less than or equal to about 2% total of extractable aluminum-containing oxides and iron-containing oxides, and less than about 5% of the calcium-containing compound.

The method of making a highly purified diatomite composition may include providing a diatomite comprising less than or equal to about 2% of combined contents of alumina (Al₂O₃) and iron-containing oxide.

The acid washing step may include washing the diatomite with at least one acid selected from the group consisting of sulfuric acid (H₂SO₄), hydrochloric acid (HCI), and nitric acid (HNO₃). As used in this disclosure, the acid washing may also be referred to as "acid leaching" or "acid extracting." Without wishing to be bound by a particular theory, it is believed that the acid washing step extracts or leaches metal-containing compounds from the diatomite, thereby increasing the relative amount of silica (SiO₂) in the diatomite composition.

The acid washing step is performed using an acid solution having an acid strength in a range from about 0.1 M to about 2 M, such as, for example, in a range from about 0.1 M to about 1M, from about 1 M to about 2 M, from about 0.5 M to about 1M, or from about 0.5 M to about 2 M. According to some embodiments, the solid content in the acid solution can range from about 5% to about 20%, such as from about 5% to about 15%, about 5% to about 10%, from about 10% to about 20% or from about 15% to about 20%.

According to some embodiments, the acid washing step may occur at a temperature in a range from about ambient room temperature (about 20 degrees C) to about 200 degrees C, such as, for example from about 20 degrees C to about 100 degrees C, or from about 50 degrees C to about 100 degrees C. According to some embodiments, the acid wash can be performed under ambient pressure. According to other embodiments, the acid wash can be performed under a pressure in a range from about ambient pressure to about 1.4 MPa (200 psi), such as, for example, from about 0.14 MPa (20 psi) to about 1.4 MPa (200 psi), from about 0.34 MPa (50 psi) to about 1.4 MPa (200 psi), or from about 0.14 MPa (20 psi) to about 0.70 MPa (100 psi).

According to some embodiments, the acid washing step can be carried out for a time or duration in a range from about 10 minutes to about 120 minutes, such as, for example, from about 20 minutes to about 60 minutes, from about 30 minutes to about 60 minutes, from about 30 minutes to about 120 minutes, or from about 60 minutes to about 120 minutes. According to some embodiments, the acid washing step may include a step of rinsing the acid from the diatomite. The rinsing step may include, for example, more than one rinse with water, such as 1 to 3 rinses with water. According to some embodiments, the rinsing may be sufficient to increase the pH of the diatomite to a pH of at least about 5.0, such as, for example, at least about 5.5, at least about 6.0, at least about 6.5, or at least about 7.0. According to some embodiments, the rinses may be done at an elevated temperature (relative to ambient), such as, for example, at a temperature of at least about 30 degrees C, at least about 40 degrees C, or at least about 50 degrees C.

The calcining step occurs prior to the acid washing step. The calcining includes flux-calcining the diatomite.

According to embodiments, the method may not include a flotation step. It may be desirable to not include a flotation step due to the cost of performing flotation. For example, for diatomite containing low clay content, it may be useful to exclude a flotation step because flotation may be used to remove clay particles from the fiatomite. It may be desirable to produce the purified diatomite composition without the use of a flotation step to reduce the overall cost of the production process.

The chemical composition of the diatomite composition may be measured using wavelength-dispersive X-ray fluorescence spectroscopy (WDXRF) using, for example, an Thermo ARL Advant'XP Sequential XRD, a wavelength-dispersive X-ray fluorescence spectrometer, commercially available from Thermo Scientific.

According to some embodiments, the diatomite composition may include greater than or equal to about 92% silica (SiO₂), such as, for example, greater than or equal to about 93% silica, greater than or equal to about 94% silica, greater than or equal to about 95% silica, greater than or equal to about 96% silica, greater than or equal to about 97% silica, or greater than or equal to about 98% silica.

According to some embodiments, the calcium-containing compound may include at least one of calcium oxide (CaO) and calcium carbonate (CaCO₃). According to some embodiments, the diatomite composition may include from about 0.5% to about 3% of the calcium-containing compound, such as, for example, from about 1% to about 3% of the calcium-containing compound, from about 1% to about 2% of the calcium-containing compound, or from about 0.5% to about 1.5% of the calcium-containing compound.

Diatomite typically contains various inorganic compounds, such as for instance iron-containing and aluminum-containing compounds. One common type of iron-containing compound found in diatomite is iron oxide (e.g., Fe₂O₃). One common type of aluminum-containing compound is alumina (Al₂O₃). The diatomite composition includes less than or equal to about 2% total of aluminum-containing oxides and iron-containing oxides, such as, for example, less than about 1% aluminum-containing oxides and less than about 1% iron-containing oxides, less than about 0.5% aluminum-containing oxides and less than about 1.5% iron-containing oxides, or less than about 1.5% aluminum-containing oxides and less than about 0.5% iron-containing oxides. According to some embodiments, the diatomite composition may include less than or equal to about 1% aluminum-containing oxides. According to some embodiments, the diatomite composition may include less than or equal to about 1% iron-containing oxides. According to some embodiments, the diatomite composition may include less than or equal to about 1% total of aluminum-containing oxides and iron-containing oxides.

The diatomite may include less than or equal to about 2% of combined contents of Al₂O₃ and iron oxide (Fe₂O₃). The diatomite is processed by flux calcining the diatomite followed by acid washing the diatomite. It may also be processed without a flotation step. Acid washing before drying and packaging may produce a purified diatomite with reduced impurity solubilities. This method may include a single step purification method, in which additional steps, such as, for example attrition scrubbering, hydrocycloning, and flotation, are not used to remove clay substances.

When used in filter applications, diatomite products may be processed to provide a range of filtration rates, which may be closely related to their permeability. Permeability can be reported in units of Darcies, commonly abbreviated "Da" or "D," or milli-Darcies, commonly abbreviated "mD." Permeability may be determined using a specially constructed device called a Vel Permeability meter, designed to form a filter cake on a septum from a suspension of diatomite in water, and then measuring the time required for a specified volume of water to flow through a measured thickness of filter cake of known cross-sectional area. The principles have been previously derived for porous media from Darcy's law so an array of alternative devices and methods are in existence that correlate well with permeability. The selection of a filter aid with a particular permeability suitable for a specific filtration process may depend on the flow rate and degree of fluid clarification desired for the particular application.

According to some embodiments, the diatomite composition may have a permeability greater than or equal to about 4.93 x 10⁻¹⁴ m² (50 mD). For example, the diatomite composition may have a permeability greater than or equal to about 7.4 x 10⁻¹⁴ m² (75 mD), greater than or equal to about 9.9 x 10⁻¹⁴ m² (100 mD), greater than or equal to about 1.48 x 10⁻¹³ m² (150 mD), greater than or equal to about 2.47 x 10⁻¹³ m² (250 mD), greater than or equal to about 4.93 x 10⁻¹³ m² (500 mD), greater than or equal to about 7.4 x 10⁻¹³ m² (750 mD), greater than or equal to about 9.87 x 10⁻¹³ m² (1000 mD), greater than or equal to about 1.28 x 10⁻¹² m² (1300 mD), greater than or equal to about 1.48 x 10⁻¹² m² (1500 mD), greater than or equal to about 1.68 x 10⁻¹² m² (1700 mD), greater than or equal to about 1.73 x 10⁻¹² m² (1750 mD), greater than or equal to about 1.78 x 10⁻¹² m² (1800 mD), greater than or equal to about 1.88 x 10⁻¹² m² (1900 mD) greater than or equal to about 1.97 x 10⁻¹² m² (2000 mD), or greater than or equal to about 2.07 x 10⁻¹² m² (2100 mD).

According to some embodiments, the diatomite composition may have pH in the range from about 5.0 to about 9.0, such as, for example, from about 6.0 to about 8.0, from about 7.0 to about 9.0, from about 7.0 to about 8.0, or from about 8.0 to about 9.0. The pH of the diatomite composition may be measured by mixing 10.0 g of the diatomite composition with 100 ml of deionized water for 30 minutes, then measuring the pH using, for example, an Accumet® pH/conductivity meter, commercially available from Thermo Fisher Scientific Inc.

According to some embodiments, the diatomite composition may have a BET surface area greater than or equal to about 1.5 m²/g. For example, the diatomite composition may have a BET surface area greater than or equal to about 2.0 m²/g, greater than or equal to about 2.5 m²/g, greater than or equal to about 3.0 m²/g, greater than or equal to about 4.0 m²/g, greater than or equal to about 5.0 m²/g, greater than or equal to about 6.0 m²/g, greater than or equal to about 7.0 m²/g, or greater than or equal to about 8.0 m²/g.

The particle size distribution of the diatomite composition may be quantified using, for example, a laser diffraction instrument, such as a Microtrac Model X-100, commercially available from Leeds & Northrup. This instrument is fully automated and the results are obtained using a volume distribution formatted in geometric progression of 100 channels, running for 30 seconds with the filter on. The distribution is characterized using an algorithm to interpret data characterized by a diameter, d. Particle size distribution values, such as, for example, d₅₀ and d₉₀ values, of the sample may be identified by the instrument. For example, the diatomite composition may be characterized by a median particle diameter, or d₅₀, defined herein as the size at which 50 percent of the particles have a diameter less than or equal to this value. In addition, the diatomite composition may be characterized by a d₉₀ value, defined herein as the size at which 90 percent of the particles have a diameter less than or equal to this value. All particle size distributions in this disclosure were measured using a Microtrac Model X-100.

According to some embodiments, the diatomite composition has a median particle size (d₅₀) in a range from about 5 microns to about 100 microns, such as, for example, in a range from about 5 microns to about 50 microns, in a range from about 5 microns to about 15 microns, in a range from about 10 microns to about 300 microns, in a range from about 10 microns to about 20 microns, in a range from about 20 microns to about 40 microns, or in a range from about 20 microns to about 30 microns.

According to some embodiments, the diatomite composition may have d₉₀ value less than or equal to about 200 microns, such as, for example, less than or equal to about 150 microns, less than or equal to about 125 microns, less than or equal to about 100 microns, less than or equal to about 75 microns, less than or equal to about 50 microns, less than or equal to about 40 microns, or less than or equal to about 30 microns.

When diatomite products are used in filters and/or food-related applications, metals and metal ions may become soluble. For example, acids may solubilize metal ions contained in various oxides or chemical compounds of the diatomite. Certain soluble metals, such as arsenic and lead, are undesirable, and high soluble concentrations of these metals may create health concerns when solubilized in high concentrations. The acid washing process disclosed herein may reduce the solubility of undesirable metals by leaching the metals away during the wash. This reduction in soluble metals may improve the compatibility of the diatomite for use in filter applications or food-related applications. Unless described otherwise in this disclosure, "acid-soluble" or "soluble" metals may also be referred to herein as "extractable" metals.

According to some embodiments, the diatomite composition may include less than or equal to about 10 ppm acid-soluble arsenic, less than or equal to about 5 ppm acid-soluble arsenic, less than or equal to about 1 ppm acid-soluble arsenic, such as, for example, less than or equal to about 0.8 ppm acid-soluble arsenic, less than or equal to about 0.7 ppm acid-soluble arsenic, less than or equal to about 0.6 ppm acid-soluble arsenic, less than or equal to about 0.5 ppm acid-soluble arsenic, less than or equal to about 0.4 ppm acid-soluble arsenic, less than or equal to about 0.3 ppm acid-soluble arsenic, less than or equal to about 0.2 ppm acid-soluble arsenic, or less than or equal to about 0.1 ppm acid-soluble arsenic. According to some embodiments, the acid-soluble arsenic may be at or below the detection limit of the instrument, which may generally be less than 0.1 ppm acid-soluble arsenic or 0.0 ppm acid-soluble arsenic.

According to some embodiments, the diatomite composition may include less than or equal to about 1 ppm acid-soluble lead. For example, the diatomite composition may include less than or equal to about 0.8 ppm acid-soluble lead, less than or equal to about 0.7 ppm acid-soluble lead, less than or equal to about 0.6 ppm acid-soluble lead, less than or equal to about 0.5 ppm acid-soluble lead, less than or equal to about 0.4 ppm acid-soluble lead, less than or equal to about 0.3 ppm acid-soluble lead, less than or equal to about 0.2 ppm acid-soluble lead, or less than or equal to about 0.1 ppm acid-soluble lead. According to some embodiments, the acid-soluble lead may be at or below the detection limit of the instrument, which may generally be less than 0.1 ppm acid-soluble lead or 0.0 ppm acid-soluble lead.

According to some embodiments, the diatomite composition may include less than or equal to about 100 ppm acid-soluble aluminum. For example, the diatomite composition may include less than or equal to about 70 ppm acid-soluble aluminum, less than or equal to about 60 ppm acid-soluble aluminum, less than or equal to about 50 ppm acid-soluble aluminum, less than or equal to about 40 ppm acid-soluble aluminum, less than or equal to about 30 ppm acid-soluble aluminum, less than or equal to about 20 ppm acid-soluble aluminum, less than or equal to about 15 ppm acid-soluble aluminum, less than or equal to about 10 ppm acid-soluble aluminum, less than or equal to about 5 ppm acid-soluble aluminum, or less than or equal to about 3 ppm acid-soluble aluminum.

According to some embodiments, the diatomite composition may include less than or equal to about 800 ppm acid-soluble calcium, such as, for example, less than or equal to about 500 ppm acid-soluble calcium, less than or equal to about 400 ppm acid-soluble calcium, less than or equal to about 300 ppm acid-soluble calcium, less than or equal to about 200 ppm acid-soluble calcium, less than or equal to about 150 ppm acid-soluble calcium, less than or equal to about 100 ppm acid-soluble calcium, less than or equal to about 75 ppm acid-soluble calcium, or less than or equal to about 50 ppm acid-soluble calcium.

According to some embodiments, the diatomite composition may include less than or equal to about 100 ppm acid-soluble iron, such as, for example, less than or equal to about 70 ppm acid-soluble iron, less than or equal to about 50 ppm acid-soluble iron, less than or equal to about 40 ppm acid-soluble iron, less than or equal to about 30 ppm acid-soluble iron, less than or equal to about 20 ppm acid-soluble iron, less than or equal to about 15 ppm acid-soluble iron, less than or equal to about 10 ppm acid-soluble iron, less than or equal to about 5 ppm acid-soluble iron, or less than or equal to about 3 ppm acid-soluble iron.

An indicator of degree to which a diatomite product retains the porous and intricate structure unique to diatomite can be obtained by measuring its centrifuged wet density or settled wet density, or an equivalent measure of its packed density because the magnitude of the density is limited by the packing arrangement that can be achieved. Wet density may be a useful measurement because it reflects the void volume available to entrap or contain particulate matter in a filtration process. Wet density can be an important criteria to determine the filtration efficiency. Diatomite products with lower wet densities generally have greater void volumes, and thus, greater filtration efficiency.

Convenient measurements of packed densities, such as wet densities, of diatomite powders are more reproducible in liquid media than in gases. A method for determining the packed density of the highly purified products of the present disclosure is by measurement of the centrifuged wet density. If the sample to be tested is a non-calcined product, the sample should be dried to constant weight at 110 °C in air, and subsequently allowed to cool to room temperature in air (i.e., dried). If the sample to be tested is a calcined or flux calcined product, the sample should be dried to constant weight at room temperature in air. To measure wet density, a sample of known weight may be placed in a calibrated centrifuge tube, to which deionized water is added to make up a specified volume. The mixture is shaken thoroughly until all of the sample is wetted and there is no dry powder remaining. Additional deionized water may be added around the top of the centrifuge tube to rinse down any mixture adhering to the side of the tube from shaking. The tube may be centrifuged by a centrifuge (such as IEC MP4R by International Equipment Company or equivalent for, for example, 3 minutes at 2500 rpm. Following centrifugation, the tube is carefully removed so as not to disturb the solids, and the level (i.e., volume) of the settled matter may be measured to the nearest half of a 0.05 mL graduation on the tube. The centrifuged wet density of the known weight of powder can be calculated by dividing the sample weight by the measured volume. Typically, centrifuged wet density is reported in units of lb/ft³ or in units of g/cm³. The conversion factor between these units is 1 lb/ft³ ≈ 0.01602 g/cm³.

According to some embodiments, the diatomite composition may have a wet density in a range from about 0.1 to about 0.5 g/cm³, such as, for example, in a range from about 0.1 to about 0.3 g/cm³, in a range from about 0.1 to about 0.2 g/cm³, in a range from about 0.2 to about 0.4 g/cm³, or in a range from about 0.2 to about 0.3 g/cm³.

Before using the diatomite composition in filtration processes, the diatomite may undergo at least one conditioning process, such as drying, calcining, milling, classification, crushing, and grinding. For instance, diatomite may be dried and calcined for reasons such as to remove moisture; to convert organic substances into oxides, silicate, or aluminosilicates; and/or to sinter various undesirable inorganic compounds such as calcium carbonate, calcium sulfate, iron derivatives, and sulfides. According to some embodiments, the conditioning process may occur after the acid washing step. According to some embodiments, the conditioning process may occur before the acid washing step. According to some embodiments, the conditioning process, such as grinding, may occur after the calcining step.

The diatomite is flux calcined. Calcination may also serve to agglomerate the diatoms and their fragments into aggregates, so as to reduce the content of fine particles and increase permeability. Calcination may be performed at temperatures ranging from, for example, about 600 °C to about 1300 °C, such as from about 600 °C to about 1200 °C, from about 700 °C to about 900 °C, from about 800 °C to about 1000 °C, or from about 900 °C to about 1100 °C.

The calcination step includes flux calcining the diatomite. Flux calcination may refer to calcination that uses a low melting point compound as flux agent to aid in agglomeration and reduce the melting temperature of the batch. According to some embodiments, the flux may include, for example, an alkaline flux, such as a sodium compound. The flux may include, for example, sodium carbonate, soda ash, sodium chloride (NaCI), and/or potassium carbonate (K₂CO₃). The flux may be added in an amount up to, for example, about 5% by weight compared to the diatomite. Flux calcination may be performed for various reasons, such as, for example, to decrease the energy input required to calcine diatomite, and/or to reduce the temperature at which sintering and agglomeration of diatomite particles occur (thus permitting larger agglomerates). Flux calcination is carried out at temperatures ranging from about 300 °C to about 1300 °C, such as, for example, from about 700 °C to about 900 °C, from about 800 °C to about 1200 °C, from about 900 °C to about 1100 °C, or from about 900 °C to about 1000 °C. During flux calcination, the porosity and specific surface area of the diatomite may decrease and, in some cases, a portion of the amorphous SiO₂ may be transformed into a crystalline phase called cristobalite. According to some embodiments, the calcination may include flash calcining the diatomite.

According to some embodiments, the flux may include at least one alkali metal. For example, the flux may include sodium, potassium, rubidium, or cesium. The flux may be introduced in various forms, for example, salts of the at least one alkali metal. In some embodiments, the flux may be in the form of a carbonate salt. In other embodiments, the flux may be in the form of a chloride salt. In further embodiments, the flux may be in the form of a nitrate salt. In yet other embodiments, the flux may include sodium carbonate, potassium carbonate, rubidium carbonate, or cesium carbonate.

According to some embodiments, the flux may be present in the initial diatomite feed composition in an amount ranging from about 2 to about 20% by weight relative to the total weight of the diatomite feed composition. For example, the flux may be present in an amount ranging from about 5 to about 20% by weight, or in an amount ranging from about 5 to about 11% by weight relative to the total weight of the diatomite feed composition.

The calcination temperature and retention time may vary, in part depending on the equipment used for calcination. Calcination is carried out at a temperature in a range from about 300 °C to about 1300 °C, such as, for example, from about 600 °C to about 900 °C, from about 700 °C to about 900 °C, from about 800 °C to about 1200 °C, from about 900 °C to about 1100 °C, or from about 900 °C to about 1000 °C. Retention times may range from about a few seconds to about several minutes. In one embodiment, the retention time may range from about 2 minutes to about 120 minutes. In other embodiments, the retention time may range from about 10 minutes to about 60 minutes, or from about 30 minutes to about 60 minutes. In yet another embodiment, the retention time may be about 30 minutes. In another embodiment, the retention time may be about 60 minutes. In yet a further embodiment, the retention time may be about 120 minutes. Calcination of diatomite may be performed in air, although other flux calcination environments may also be suitable, such as, for example, a reducing atmosphere.

### EXAMPLES

Samples using two diatomite products were prepared from high-calcium diatomite obtained from Alicante, Spain. Control 1 and samples A1-A3 included a flux-calcined diatomite, commercially available as CELITE® 545 from Imerys Filtration Minerals, Inc. Control 2 and samples B1-B3 (provided for the purposes of comparison) included a straight calcined diatomite, calcined at a temperature between 900 °C and 1000 °C, such as commercially available as Standard SUPERCEL® from Imerys Filtration Minerals, Inc.

Acid leaching was performed on each of the samples A1-A3 and B1-B3 using one of three different acids. Samples A1 and B1 were treated with 0.5 M sulfuric acid (H₂SO₄). Samples A2 and B2 were treated with 0.5 M hydrochloric acid (HCI). Samples A3 and B3 were treated with 0.5 M nitric acid (HNO₃). Each of the acid treating processes was performed by loading the diatomite sample into the acid at about 11% loading by weight. The acid was then boiled on a magnetic stirring hotplate for 60 minutes. After leaching, the solids were collected by filtration through a Whatman #3 filter paper. The resulting cake was then rinsed at least three times using deionized water until the conductivity of the filtrate was less than 10 µS/cm (micro-Siemens per centimeter). The filter cake was then dried at 105 °C for more than two hours and redispersed for analysis. No acid leaching was performed on the control samples.

The chemical composition for each of control 1, control 2, samples A1-A3, and samples B1-B3 was analyzed using a Thermo ARL AdvantXP WDXRF spectrometer. The chemical compositions are shown in Table 1 below.

**TABLE 1: Chemical Compositions**

| **(%)** | **Control 1** | **A1 (H₂SO₄)** | **A2 (HCl)** | **A3 (HNO₃)** | **Control 2** | **B1 (H₂SO₄)** | **B2 (HCl)** | **B3 (HNO₃)** |
|---|---|---|---|---|---|---|---|---|
| **SiO₂** | 85.3 | 91.98 | 93.80 | 94.0 | 88.5 | 96.98 | 97.6 | 97.8 |
| **CaO** | 11.59 | 4.24 | 2.69 | 2.96 | 9.92 | 1.97 | 1.11 | 1.24 |
| **Na₂O** | 1.13 | 1.15 | 1.10 | 1.17 | 0.13 | 0.05 | 0.04 | 0.06 |
| **Al₂O₃** | 0.85 | 0.96 | 0.95 | 0.91 | 0.71 | 0.51 | 0.71 | 0.54 |
| **MgO** | 0.41 | 0.91 | 0.64 | 0.31 | 0.21 | 0.15 | 0.21 | 0.12 |
| **Fe₂O₃** | 0.34 | 0.36 | 0.38 | 0.37 | 0.20 | 0.13 | 0.13 | 0.14 |
| **P₂O₅** | 0.14 | 0.05 | 0.05 | 0.05 | 0.10 | 0.02 | nd | 0.02 |
| **K₂O** | 0.11 | 0.12 | 0.13 | 0.12 | 0.07 | 0.04 | 0.05 | 0.05 |
| **TiO₂** | 0.05 | 0.05 | 0.06 | 0.05 | 0.03 | 0.03 | nd | 0.03 |
| **SO₃** | nd | 0.04 | nd | nd | nd | nd | nd | nd |
| **Total** | 99.86 | 99.86 | 99.80 | 99.91 | 99.83 | 99.88 | 99.89 | 99.96 |

| | | | | | | | | |
|---|---|---|---|---|---|---|---|---|
| nd = not detected | | | | | | | | |

As shown in Table 1, acid leaching appears to reduce the total bulk calcium of the diatomite. For example, the total CaO content of the flux-calcined diatomite was reduced from 11.6% (control 1) to about 3-4% (samples A1-A3). The relative SiO₂ content of the flux-calcined sample also increased from about 85% (control 1) to about 92-94% (samples A1-A3). A similar effect also appears in the standard calcined samples (provided for the purposes of comparison). The CaO content was reduced from about 10% (control 2) to about 1-2% (samples B1-B3). The relative SiO₂ of the standard calcined samples also increased from about 88% (control 2) to about 96-98% (samples B1-B3).

Table 1 also appears to show that the total calcium contents in the straight calcined diatomite (samples B1-B3) can be leached out or extracted to a lower level than in the flux-calcined diatomite (samples A1-A3). Without wishing to be bound by a particular theory, it is believed that this indicates that the flux-calcination may result in the formation of silicate phases that have combined some dispersed calcium with the flux agent. For example, it is believed that, during flux calcination, a small fraction of the calcium may have been affixed with the agglomeration processes, which may be reflected on the relatively higher bulk CaO contents of the acid-washed, flux-calcined diatomite as compared to the straight-calcined diatomite.

Based on Table 1, it also appears that acid leaching with sulfuric acid may remove relatively less CaO from the diatomite than hydrochloric acid or nitric acid. Without wishing to be bound by a particular theory, it is believed that this may occur because of relatively weaker leaching power of the sulfuric acid solution and/or the formation of retained calcium sulfate residues in the acid washed products. Based on Table 1, it also appears that the acid leaching with HCI and HNO₃ solutions appear to be similarly effective at leaching metals such as calcium.

The acid-soluble metals were also measured using the Food Chemical Codex (FCC) method for each of samples A1-A3 and B1-B3. The amount of acid-soluble metals was determined by placing 10.0 g of each sample into a respective 250-ml Erlenmeyer flask, and then adding 50 ml of 0.5N hydrochloric acid (Aldrich ACS reagent, Lot No. HQ) to the flask. The flask was then covered with a parafilm, heated at 70 °C in a water bath, and shaken at 100 rpm for 15 minutes. The flask was then cooled and filtered with a Whatman No. 3 filter paper into a 100 ml volumetric flask. The resulting slurry was washed with three 10 ml portions of hot (70 °C) deionized water, and made up to the mark of the 100-ml volumetric flask with deionized water. The filtrate was analyzed for the soluble metals shown in Table 2 using a Fisson 1310+ ICP spectrometer. The acid solubility of calcium in the control samples was not measured directly; however, given the known high solubility in the control samples, the calcium solubility was estimated to be greater than 5% (i.e., greater than 50,000 ppm).

**TABLE 2: Acid-Soluble Metals**

| **Solubl**e **Metal** | **Control 1** | **A1 (H₂SO₄)** | **A2 (HCl)** | **A3 (HNO₃)** | **Control 2** | **B1 (H₂SO₄)** | **B2 (HCl)** | **B3 (HNO₃)** |
|---|---|---|---|---|---|---|---|---|
| **Al (ppm)** | 412.9 | 9.5 | 2.9 | 6.1 | 199.5 | 39.9 | 19.4 | 28.3 |
| **As (ppm)** | 0.6 | 0.0 | 0.0 | 0.1 | 0.9 | 0.0 | 0.3 | 0.2 |
| **Ca (ppm)** | >50,000* | 753 | 44 | 56 | >50,000* | 267 | 115 | 155 |
| **Cu (ppm)** | 1.1 | 7.0 | 0.3 | 0.1 | 1.2 | 6.2 | 0.5 | 0.10 |
| **Pb (ppm)** | 0.2 | 0.2 | 0.1 | 0.1 | 0.2 | 0.4 | 0.1 | <0.1 |
| **Fe (ppm)** | 119 | 6.7 | 2.8 | 5.1 | 215 | 23.9 | 19.7 | 40.1 |

As shown in Table 2, acid washing reduced the acid-soluble calcium from greater than 5% in the control samples to less than 1,000 ppm (all samples), and in many cases less than about 150 ppm (samples A2, A3, B2, B3) or even less than 100 ppm (samples A2 and A3). The acid leaching effects of HCI and HNO₃ solutions appeared to be similar and both of these acids appear to leach more soluble metals from the diatomite when compared to the H₂SO₄ solution. Without wishing to be bound by a particular theory, it is believed that the relatively weaker leaching power and/or possible residual calcium sulfate precipitation resulted in the higher calcium solubility of the sulfuric acid washed products.

When comparing the acid leached products by HCl and HNO₃ solutions, even though the acid-washed, flux-calcined samples (A2 and A3, respectively) show higher bulk calcium contents (see Table 1) than the acid-washed, standard calcined samples (B2 and B3), the soluble calcium contents in the samples A2 and A3 appear to be lower, about 40-60 ppm, after acid washing than samples B2 and B3, which were about 100-150 ppm, as shown in Table 2. Without wishing to be bound by a particular theory, it is believed that this may be due to a relatively lower surface area of the acid leached samples A2 and A3, as compared with B2 and B3, and/or the fixation of the surface elements by flux calcination and/or agglomeration.

As shown in Table 2, acid leaching also appears to reduce the acid-soluble levels of other metallic elements, such as aluminum, iron, arsenic, and lead. Some fluctuations in the acid-soluble levels were seen in the amount of arsenic and lead in Table 2 because the amount of arsenic and lead in the acid-washed samples approached the detection limit (less than 0.1 ppm) of the ICP method.

The low levels of acid-soluble arsenic and lead (less than 1 ppm) are also believed to be below the limits (typically, 10 ppm) set by various standards and organizations, such as the U.S. Pharmacopia - National Formulary (USP-NF), the Food Chemical Codex (FCC), and Japanese Standard for Food Additive (JSFA).

The permeability, pH, conductivity, centrifuged wet density, water soluble substances, and BET surface area were also measured for each of the control samples and samples A1-A3 and B1-B3.

The pH and conductivity were measured by mixing 10.0 g of a sample with 100 ml of deionized water for 30 minutes. The pH and conductivity of the slurry were then determined using an Accumet® pH/Conductivity meter.

Water soluble substances (WSS) measurements were performed according to the Japanese Standard for Food Additive (JSFA) method. To determine WSS, 10.0 g of a sample were weighed and placed into a 250 ml Erlenmeyer flask. 100 ml of deionized water were added to sample in the flask. The solution was then boiled gently for 2 hours with supplementing water to compensate for the evaporation loss. The resulting solution was then allowed to cool and was then filtered through a Millipore SM membrane filter (pore size 0.45 microns) with suction. The container and residue cake were washed with three 10 ml portions of deionized water. The water was then allowed to evaporate. The residue was dried at 105 °C for 2 hours, and the residue was then weighed.

The permeability was measured using a Vel permeability meter, also referred to as a Vel Filter Apparatus. Each of the samples was mixed separately into soft water. Each mixture was then poured into a sealed cylinder. Air pressure of about 0.20 MPa (29 psi) was introduced into the cylinder through a stopcock at the top of the cylinder. A screen, a Whatman #4 paper, and an exit tube with a second stopcock were placed at the bottom of the cylinder. A cake was formed by opening the top and bottom stopcocks, causing the air pressure to force the water through the filtration vessel, leaving a cake of the sample to act as a filter aid with a thin veneer of water on the bottom of the vessel. The filtrate water was then reintroduced into the container without disturbing the cake. The time required for the water to pass an exact amount of liquid by volume through the filter cake was measured. The permeability of the filter aid was by application of the Darcy's Law.

The BET surface areas were measured with a Micromeritics Gemini surface area analyzer.

Wet density was measured by adding 2.0 g of a sample into a calibrated 14 mL centrifuge tube. Deionized water was added to make up a volume of approximately 10 mL in the tube. The mixture was shaken thoroughly until all of the sample was wetted and no dry powder remained. Additional deionized water was added around the top of the centrifuge tube to rinse down any mixture adhering to the side of the tube from shaking. The tube was then centrifuged using an International Equipment Company's Centra MP4R centrifuge for 3 minutes at 2500 rpm. Following centrifugation, the tube was removed without disturbing the solids, and the level (i.e., volume) of the settled matter was measured to the nearest half of a 0.05 ml graduation on the tube. The centrifuged wet density of the known weight of powder was calculated by dividing the sample weight by the measured volume.

The resulting measurements are shown in Table 3.

**TABLE 3: Exemplary Acid-Leached Diatomite Properties**

| | **Control 1** | **A1 (H₂SO₄)** | **A2 (HCl)** | **A3 (HNO₃)** | **Control 2** | **B1 (H₂SO₄)** | **B2 (HCl)** | **B3 (HNO₃)** |
|---|---|---|---|---|---|---|---|---|
| **pH** | 10.4 | 8.1 | 8.2 | 7.8 | 10.5 | 7.8 | 7.7 | 7.4 |
| **Conductivity (µS/cm)** | 84.4 | 15.9 | 11.6 | 11.3 | 131 | 11.1 | 10.3 | 13.0 |
| **Water Soluble Substances (WSS) (%) (JSFA Method)** | 0.27 | 0.25 | 0.30 | 0.25 | 0.33 | 0.42 | 0.35 | 0.29 |
| **Permeability (m²** x **10⁻¹²) (mD)** | 2.30 (2330) | 1.91 (1941) | 2.15 (2174) | 2.08 (2104) | 0.13 (127) | 0.08 (85) | 0.06 (59) | 0.07 (69) |
| **BET surface area (m²/g)** | 1.00 | 2.50 | 2.00 | 2.10 | 4.50 | 6.50 | 7.30 | 8.10 |
| **Wet Density (g/cm³)** | 0.38 | 0.32 | 0.32 | 0.32 | 0.38 | 0.39 | 0.38 | 0.39 |
| **Wet Density (lb/cf)** | 23.6 | 20.14 | 20.14 | 19.82 | 24.01 | 23.6 | 23.56 | 23.6 |

As shown in Table 3, acid washing reduced the pH of each of the samples as compared to the controls. The conductivities of the acid-washed samples also decreased from about 80-130 µS/cm (controls 1 and 2) to about 10-16 µS/cm (samples A1-A3 and B1-B3). The water soluble substances (WSS) for all samples were also below 0.5% when measured using the JSFA method.

The acid-washed samples A1-A3 and B1-B3 showed decreased permeability relative to the control samples. Without wishing to be bound by a particular theory, it is believed that the increased BET surface areas of the acid-washed samples may influence the decreased permeability because increased surface areas can increase the cake resistance to water flow.

As also shown in Table 3, the centrifuged wet densities of the acid-washed flux-calcined samples (A1-A3) decreased by about 10%, from about 0.38 g/cm³ to about 0.32 g/cm³, while wet densities of the standard calcined samples (B1-B3) showed little change. Without wishing to be bound by a particular theory, it is believed that the acid washing may result in leaching out of lime from the products from the flux-calcined samples, thereby reducing the wet density.

Particle size distributions for the each of the control samples 1 and 2 and each of acid-washed samples A1-A3 and B1-B3 were measured using a Microtrac X100 TriLaser System. The median (d₅₀) and d₉₀ particle sizes are shown below in Table 4.

**TABLE 4: Exemplary Particle Size Distributions**

| **Particle Siz**e | **Control 1** | **A1 (H₂SO₄)** | **A2 (HCl)** | **A3 (HNO₃)** | **Control 2** | **B1 (H₂SO₄)** | **B2 (HCl)** | **B3 (HNO₃)** |
|---|---|---|---|---|---|---|---|---|
| d₅₀ | 37.9 | 34.2 | 32.8 | 31.7 | 12.2 | 12.3 | 12.2 | 12.0 |
| d₉₀ | 148.4 | 126.7 | 119.5 | 116.2 | 27.3 | 27.8 | 27.2 | 27.0 |

As shown in Table 4, the median particle size (d₅₀) and the d₉₀ particle size decreased for the flux-calcined samples (A1-A3) as compared to control 1. However, the standard calcined sampled (B1-B3) do not appear to show significantly different particle sizes from control 2.

The surface morphology of control 2 and the acid-washed samples were also determined using SEM analysis. FIG. 1A shows an SEM micrograph of control 2. FIG. 1B shows an SEM micrograph of sample B1. As shown in FIGS. 1A and 1B, the acid-washed sample shows increased roughness, which is believed to contribute to the increased surface area of the acid-washed samples. Accordingly, acid washing may also increase the BET surface area of the calcined diatomite, as shown in FIG. 1B.

## Claims

1. A method of making a highly purified diatomite composition, the method comprising:
providing a diatomite comprising at least 5% of a calcium-containing compound;
flux calcining the diatomite at temperatures ranging from 300°C to 1300°C; and
acid washing the diatomite with an acid solution having an acid strength in a range of from 0.1 M to 2 M wherein the calcining step occurs prior to the acid washing step,
wherein the flux calcined, acid-washed diatomite comprises less than or equal to 2% total of extractable aluminium containing oxides and iron containing oxides and less than 5% of the calcium-containing compound, wherein the extractable aluminium containing oxides and iron-containing oxides are soluble in the acid solution.

2. The method of claim 1, wherein the acid washing comprises washing the diatomite with at least one acid selected from the group consisting of sulfuric acid (H₂SO₄), hydrochloric acid (HCl), and nitric acid (HNO₃).

3. The method of claim 1, wherein the method does not include a flotation step.

4. The method of claim 1, further comprising providing a diatomite comprising less than or equal to 2% of combined contents of alumina (Al₂O₃) and iron-containing oxide.

## Patentansprüche

1. Verfahren zur Herstellung einer hochreinen Diatomit-Zusammensetzung, das Verfahren umfassend:
Bereitstellen eines Diatomits, umfassend mindestens 5% einer calciumhaltigen Verbindung;
Flussmittelkalzinieren des Diatomits bei Temperaturen zwischen 300°C und 1300°C; und
Säurewaschen des Diatomits mit einer Säurelösung, die eine Säurestärke in einem Bereich von 0,1M bis 2M aufweist, wobei der Kalzinierungsschritt vor dem Säurewaschschritt erfolgt,
wobei der flussmittelkalzinierte, säuregewaschene Diatomit insgesamt weniger als oder gleich wie 2% extrahierbare aluminiumhaltige Oxide und eisenhaltige Oxide und weniger als 5% der calciumhaltigen Verbindung umfasst, wobei die extrahierbaren aluminiumhaltigen Oxide und eisenhaltigen Oxide in der Säurelösung löslich sind.

2. Verfahren gemäß Anspruch 1, wobei das Säurewaschen ein Waschen des Diatomits mit mindestens einer Säure, ausgewählt aus der Gruppe bestehend aus Schwefelsäure (H₂SO₄), Salzsäure (HCl) und Salpetersäure (HNO₃), umfasst.

3. Verfahren gemäß Anspruch 1, wobei das Verfahren keinen Flotationsschritt beinhaltet.

4. Verfahren gemäß Anspruch 1, ferner umfassend ein Bereitstellen eines Diatomits, der weniger als oder gleich wie 2% des kombinierten Gehalts an Aluminiumoxid (Al₂O₃) und eisenhaltigem Oxid umfasst.

## Revendications

1. Un procédé de fabrication d'une composition de diatomite hautement purifiée, le procédé comprenant :
la fourniture d'une diatomite comprenant au moins 5 % d'un composé contenant du calcium ;
la calcination par flux de la diatomite à des températures allant de 300 °C à 1300 °C ; et
le lavage à l'acide de la diatomite avec une solution acide ayant une force acide d'acide dans une plage de 0,1 M à 2 M dans lequel l'étape de calcination se produit avant l'étape de lavage à l'acide,
dans lequel la diatomite calcinée par flux, lavée à l'acide, comprend un total inférieur ou égal à 2 % d'oxydes contenant de l'aluminium et d'oxydes contenant du fer extractibles et moins de 5 % du composé contenant du calcium, dans lequel les oxydes contenant de l'aluminium et les oxydes contenant du fer extractibles sont solubles dans la solution acide.

2. Le procédé selon la revendication 1, dans lequel le lavage à l'acide comprend le lavage de la diatomite avec au moins un acide choisi dans le groupe constitué par l'acide sulfurique (H₂SO₄), l'acide chlorhydrique (HCl), et l'acide nitrique (HNO₃).

3. Le procédé selon la revendication 1, dans lequel le procédé ne comprend pas d'étape de flottation.

4. Le procédé selon la revendication 1, comprenant en outre la fourniture d'une diatomite comprenant des teneurs combinées inférieures ou égales à 2 % d'alumine (Al₂O₃) et d'oxyde contenant du fer.
